# EUROPÄISCHE PATENTSCHRIFT

(11) **EP 3 341 240 B1**
(45) Veröffentlichungstag und Bekanntmachung des Hinweises auf die Patenterteilung: **29.12.2021**
(21) Anmeldenummer: 16754245.5
(22) Anmeldetag: 11.08.2016
(51) Int. Cl.: B60N 2/12, B60N 2/42, B60N 2/427, B60N 2/68

(54) **VORRICHTUNG ZUR ANBRINGUNG EINES FAHRZEUGSITZES**
DEVICE FOR INSTALLING A VEHICLE SEAT
DISPOSITIF POUR MONTER UN SIÈGE DE VÉHICULE

(30) Priorität: 27.08.2015 DE 102015011057
(43) Veröffentlichungstag der Anmeldung: 04.07.2018
(73) Patentinhaber: Rheinmetall Waffe Munition GmbH, 29345 Unterlüss (DE)
(72) Erfinder: LEHMANN, Kevin, 23569 Lübeck (DE); BERG, Martin, 29221 Celle (DE); KOCH, Ralf, 29574 Ebstorf (DE)
(74) Vertreter: Dietrich, Barbara
(86) Internationale Anmeldenummer: PCT/EP2016/069102
(87) Internationale Veröffentlichungsnummer: WO 2017/032606

(56) Entgegenhaltungen:
- EP-A1- 1 426 243
- EP-A2- 2 213 505
- US-A- 5 868 472

## Beschreibung

Die vorliegende Erfindung betrifft eine Vorrichtung zur Anbringung eines Fahrzeugsitzes und dient den Fahrzeugen dazu, den Fahrzeugsitz am Chassis zu befestigen. Solche Vorrichtungen werden häufig auch Sitzkonsole genannt.

Diese Vorrichtungen werden benötigt, da, beispielsweise in Chassis von Fahrzeugen, diese häufig nicht eine entsprechende Kontur aufweisen und/oder entsprechende Befestigungsmöglichkeiten aufweisen, um einen Fahrzeugsitz entsprechend im Chassis zu befestigen. Hierzu wird eine entsprechende Sitzkonsole im Chassis vorgesehen, welche eine Montage des Fahrzeugsitzes ermöglicht.

Eine solche Vorrichtung zeigt beispielsweise die EP 1 426 243 A1. Diese offenbart eine entsprechende Sitzkonsole, um einen Fahrzeugsitz anzubringen.

Vorrichtungen zur Anbringung eines Fahrzeugsitzes können auch Schutz- oder Komfortfunktionen beinhalten, um Bewegungen und- oder Beschleunigungen vom Fahrzeugchassis gedämpft oder abgefedert an dem Fahrzeugsitz weiterzugeben. Dadurch werden dynamische Kräfte, die auf das Fahrzeugchassis einwirken nur entsprechend vermindert auf den Sitz und somit auf den Insassen des Sitzes weitergegeben, um diesen zu schützen oder eine möglichst komfortable Sitzposition zu gewährleisten.

So zeigt beispielsweise die DE 10 2008 044 188 A1 ein Energieübertragungselement, welches Kräfte, wie sie bei einem Seitenaufprall auftreten können, vermindert auf den Fahrzeugsitz weitergibt.

Um einen Insassen vor extremen Kräften und/ oder Beschleunigungen zu schützen, sind jedoch Vorrichtungen mit möglichst kurzer Reaktionszeit und der Fähigkeit, solche extremen Kräfte und oder Beschleunigungen aufnehmen zu können, notwendig. Extreme Kräfte können beispielsweise in speziellen Fahrzeugen auftreten, wie Rennwagen oder Gefechtsfahrzeugen.

Wenn, beispielsweise bei Rennwagen, während einer Fahrt mit hohen Geschwindigkeiten, Karambolagen auftreten, wirken sehr hohe Kräfte und/oder Beschleunigungen auf das Fahrzeug ein und somit auch auf den Fahrzeugsitz. Ein anderes Anwendungsbeispiel wäre ein Gefechtsfahrzeug, wenn dieses zum Beispiel über eine Mine fährt und die Explosionskräfte der Mine auf das Fahrzeug und somit auf den Fahrzeugsitz wirken.

Aufgabe der vorliegenden Erfindung ist es somit, eine Vorrichtung zur Anbringung eines Fahrzeugsitzes zu schaffen, welches selbst bei hohen Kräften und oder Beschleunigungen diese gedämpft an den Fahrzeugsitz weiterleitet und somit den Insassen auf dem Fahrzeugsitz schützt.

Diese Aufgabe wird mit dem Kennzeichen des vorliegenden Hauptanspruchs 1 gelöst und zwar indem der Fahrzeugsitz auf Querverbindungen angeordnet ist, welche mit mindestens einer Ausnehmung versehen sind, wodurch mindestens ein Spalt in der Querverbindung entsteht.

Durch diesen Spalt ergeben sich in den Querverbindungen Sollknickpunkte, welche dafür sorgen, dass einwirkende Kräfte zunächst durch die Spalte und den Sollknickpunkten zumindest teilweise absorbiert werden und dadurch die Kraft, die auf den Sitz übertragen wird, minimiert wird, sodass ein Insasse auf dem Fahrzeugsitz im Fahrzeug geschützt ist.

Die erfindungsgemäße Vorrichtung besteht dazu aus mindestens zwei Befestigungselementen und mehreren Querverbindungen zwischen den Befestigungselementen. Die Befestigungselemente dienen zur Befestigung der Vorrichtung im Chassis des Fahrzeuges und werden durch die Querverbindungen zwischen den Befestigungselementen auf Abstand gehalten. Die Querverbindungen verlaufen bevorzugterweise parallel zueinander, wobei die Befestigungselemente jeweils im Bereich der Enden der Querverbindungen angebracht sind.

In einer besonderen Ausführungsform sind die Befestigungselemente als längliche Schienen oder Profile ausgebildet, wobei die Querverbindungen auf einer Seite oder Hälfte der Befestigungselemente angebracht sind und die Befestigungselemente auf der anderen Seite oder Hälfte, also der den Querverbindungen gegenüberliegenden Seite oder Hälfte am Chassis angebracht werden.

Diese Anbringung am Chassis kann entweder am Boden des Chassis geschehen, an den Wänden des Chassis oder am Dach des Chassis. Im letzteren Falle ist die erfindungsgemäße Vorrichtung hängend im Fahrzeug befestigt.

Die erfindungsgemäße Vorrichtung weist weiterhin mindestens eine Montagemöglichkeit auf, mittels welcher der Fahrzeugsitz angebracht werden kann. Diese Montagemöglichkeit ist auf den Querverbindungen angeordnet, sodass die Sitzfläche des Fahrzeugsitzes auf den Querverbindungen ruht. Bevorzugterweise ist die Montagemöglichkeit als mindestens eine Schiene ausgeführt, in welche der Fahrzeugsitz durch geeignete Mittel einbringbar ist. In der Ausführungsform der Schiene ist es dann möglich, den Fahrzeugsitz bewegbar in der Schiene zu befestigen. Dadurch ist es möglich, die Sitzposition einstellbar zu gestalten.

Eine oder mehrere solche Schienen verlaufen bevorzugter weise parallel zu den Befestigungselementen und quer zu den Querverbindungen. Dazu verläuft die Schiene orthogonal zu mindestens einer der Querverbindungen.

Erfindungsgemäß sind nun die Querverbindungen jeweils mit mindestens einer Ausnehmung versehen. Ausnehmung bedeutet in diesem Falle, dass ein Teil des Materials der Querverbindung entfernt wurde, beispielsweise durch Herausfräsen. Durch diese Ausnehmungen kann an der Stelle ein Spalt in der Querverbindung entstehen. Ebenso können die Ausnehmungen andere Formen, wie beispielsweise Löcher bilden. Die Ausnehmungen und der Spalt sind so positioniert, dass sie sich zwischen Montagemöglichkeit und Befestigungselement befinden. Die Ausnehmungen können dabei einseitig an einer Querverbindung angeordnet sein oder beidseitig von der Montagemöglichkeit. Ebenso ist es möglich, dass die Ausnehmungen die Querverbindungen durchtrennen und damit durchgehend in der Querverbindung verlaufen. Bevorzugter weise sind jedoch die Ausnehmungen so gestaltet, dass die entstehende Spalte nicht durchgängig ist.

Dadurch, dass die Befestigungselemente am Chassis befestigt sind, wirken entsprechende Kräfte und oder Beschleunigungen zunächst direkt auf die Stellen der Befestigungselemente, an welchen diesen mit dem Chassis verbunden sind. Anschließend werden die Kräfte auf die Querverbindungen übertragen, welche sich zwischen den Befestigungselementen befinden. Da die Querverbindungen starr mit den Befestigungselementen verbunden sind, werden die einwirkenden Kräfte direkt von den Befestigungselementen auf die Querverbindungen übertragen. Aufgrund der Ausnehmungen ergeben sich Sollknickpunkte in den Querverbindungen. Diese Sollknickpunkte können auf Höhe des Spaltes der Querverbindung sein und sich dadurch ergeben, dass bei Krafteinwirkungen die Querverbindungen so verformt werden, dass der Spalt durch Verbiegen und/oder Stauchen geschlossen wird. Ist der Spalt durchgehend, geschieht diese Verformung auf der dem Spalt gegenüberliegenden Seite der Querverbindung. Ebenso kann die Verformung, zumindest zum Teil, auch in den Befestigungselementen geschehen.

Durch die Krafteinwirkung wird der Spalt geschlossen und die Querverbindungen an den Sollknickpunkten verformt, wodurch ein Formschluß an der Stelle, wo der jetzt geschlossene Spalt ist, auftritt. Durch die plastische Verformung an den Sollknickpunkten, sowie in den Querverbindungen und gegebenenfalls in den Befestigungselementen, wird zumindest ein Teil der Kraft für die Verformungsarbeit benötigt. Dadurch wird die Kraft, welche anschließend auf die Montagemöglichkeit und somit mit dem Fahrzeugsitz einwirkt, verringert. Optimalerweise wird die Kraft dabei gar nicht erst an den Fahrzeugsitz weitergegeben. Hierdurch wird der Insasse auf den Fahrzeugsitz geschützt, beziehungsweise, es wird ihm eine komfortable Fahrt ermöglicht. Die Kraft, welche auf den Insassen wirkt und somit die Stauchung des Insassen fällt, damit geringer aus als eine direkte Kraftübertragung auf den Fahrzeugsitz.

In einer bevorzugten Ausführungsform sind die Querverbindungen jeweils mit mehreren Ausnehmungen versehen, sodass mindestens ein Steg zwischen den Spalten entsteht. Sind so viele Ausnehmungen vorgesehen, dass mehrere Stege entstehen, können dieser unterschiedlichen Dicken aufweisen. Dies hat den Vorteil, dass bei Krafteinwirkung über die Verformung der Querverbindungen an den Sollknickpunkten, die Stege zeitlich versetzt aufeinander treffen und somit einen Formschluß bilden. Durch die zeitlich versetzten Aufeinandertreffen der Stege, ist eine stückweise Kraftübertragung von der Querverbindung auf die Montagemöglichkeit und somit den Fahrzeugsitz möglich, wodurch mehr Kraft abgebaut werden kann, als in der Ausführungsform ohne Steg. Ebenso wird hierdurch die Kraft in kleinen Abschnitten zum Sitz übertragen.

Die Querverbindungen sind erfindungsgemäß als Hohlprofil oder Vollprofil ausgebildet und können einen runden oder eckigen Querschnitt aufweisen. Bevorzugterweise besteht die erfindungsgemäße Montagemöglichkeit aus zwei Schienen, in welcher der Fahrzeugsitz angebracht wird, um eine bessere Stabilität zu gewährleisten. Es kann aber auch eine einteilige Schiene verwendet werden, welche zwei Laufflächen aufweist.

Um die Verformung der Querverbindungen zu gewährleisten, sind diese aus plastisch verformbarem Material. Die Querverbindungen können dabei durchgängig aus einem einzigen verformbaren Material bestehen oder aus mindestens zwei verschiedenen verformbaren Materialien, mit unterschiedlicher Verformbarkeit. In dieser Ausführungsform ist es möglich, verschiedene Steifigkeiten in den Querverbindungen zu realisieren und somit die Verringerung der Kraft durch die plastische Verformung einstellbar zu gestalten.

Die Befestigungselemente können mit dem Chassis selbst verbunden werden, beispielsweise durch Schweißverbindungen. Es können aber auch Befestigungsmittel in den Befestigungselementen vorgesehen sein, durch welche die Befestigungselemente dann am Fahrzeug befestigt werden, beispielsweise durch Schraubverbindungen.

Weitere Merkmale der vorliegenden Erfindung ergeben sich aus den beigefügten Zeichnungen.

Es zeigen:
- Fig. 1: eine Vorderansicht auf die erfindungsgemäße Vorrichtung
- Fig. 2: die Teilaufnahme der Vorderansicht der erfindungsgemäßen Vorrichtung
- Fig. 3: eine Seitenansicht einer erfindungsgemäßen Vorrichtung
- Fig. 4: eine Draufsicht auf einer erfindungsgemäßen Vorrichtung.

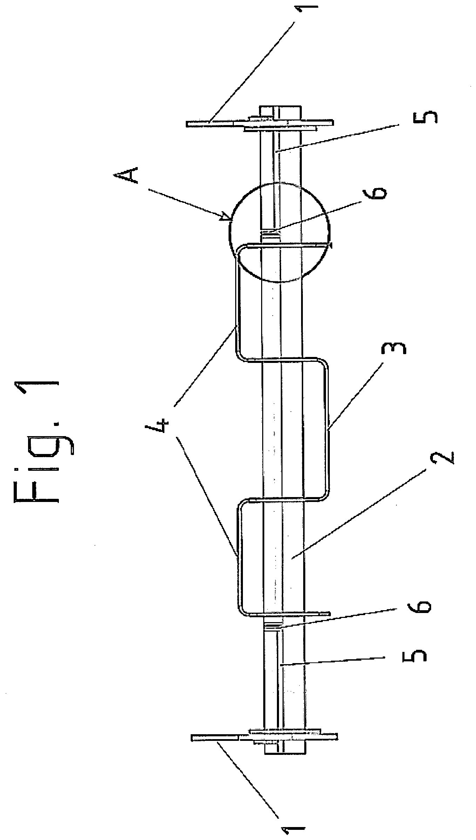

Fig. 1 zeigt die erfindungsgemäße Vorrichtung zur Anbringung eines Fahrzeugsitzes mit zwei Befestigungselementen 1. Quer zu den Befestigungselementen 1 sind mehrere Querverbindungen 2 vorgesehen, welche die Befestigungselemente 1 auf Abstand halten. Weiterhin ist eine Montagemöglichkeit 3 vorgesehen, auf welcher der Fahrzeugsitz angeordnet wird. In diesem Falle besteht die Montagemöglichkeit 3 aus einer Schiene 4, welche einteilig gestaltet ist und zwei Laufflächen aufweist. Die einteilige Gestaltung der Montagemöglichkeit 3 ermöglicht eine einfache Montage und erhöht die Stabilität der Montagemöglichkeit 3.

Auf den Schienen 4 kann dann der Fahrzeugsitz montiert werden, wobei dieser beweglich in den Schienen 4 gelagert ist, sodass eine Einstellung der Sitzposition möglich ist.

Die Querverbindungen 2 sind jeweils mit mindestens einer Ausnehmung versehen, sodass mindestens ein Spalt 6 in den Querverbindungen 2 entsteht.

Dieser Spalt 6 ist nicht durchgängig in den Querverbindungen 2 gezeigt, sodass der obere Teil des Querschnitts einen Spalt 6 aufweist, welcher nicht durchgängig ist. Gezeigt ist der Spalt 6 über den halben Querschnitt der Querverbindungen 2.

Da die Vorrichtung über die Befestigungselemente 1 am Chassis eines Fahrzeuges befestigt wird, werden Kräfte oder Beschleunigungen, welche auf das Fahrzeug einwirken, über eine Verbindungsstelle von Chassis zum Befestigungselement 1 in die Vorrichtung eingeleitet.

Die Befestigungselemente 1 leiten nun in diesem Falle die Krafteinwirkung auf die Querverbindungen 2, welche mit den entsprechenden Ausnehmungen und Spalten 6 versehen sind. Diese Spalten 6 sind zwischen der Montagemöglichkeit 3 und den Befestigungselementen 1 in der Querverbindung 2 angeordnet, sodass in die Querverbindung 2 eingeleitete Kräfte zunächst auf die Ausnehmungen beziehungsweise die Spalten 6 wirken.

Durch die Spalte 6 ist das Material der Querverbindung 2 an der Stelle des Spaltes 6 geschwächt, sodass sich an der Stelle des Spaltes 6 ein Sollknickpunkt ergibt, an welchem die eingeleitete Kraft eine plastische Verformung in der Querverbindung 2 hervorruft.

Durch die für die plastische Verformung benötigte Verformungsarbeit wird zumindest ein Teil der Kraft in der Querverbindung 2 in die Verformungsarbeit umgesetzt, sodass nur der überbleibende Teil nach der Verformungsarbeit zu Montagemöglichkeit 3 und somit dem Fahrzeugsitz weitergeleitet wird.

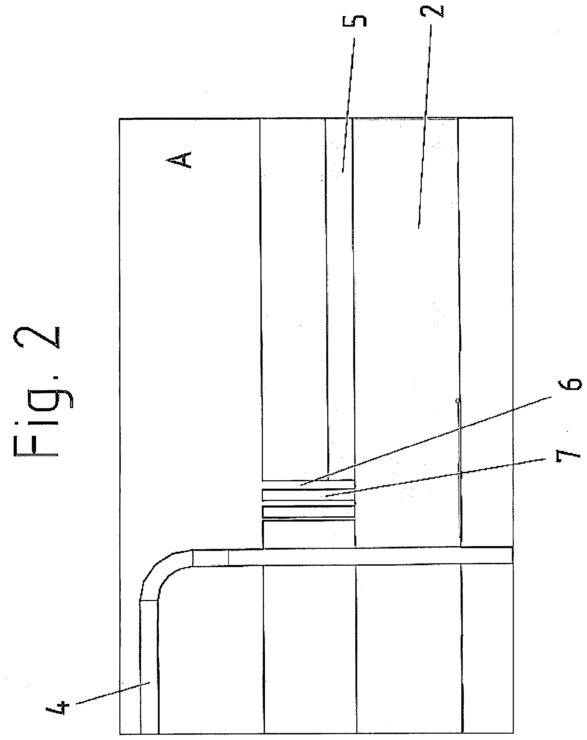

Die genaue Gestaltung der Ausnehmungen, beziehungsweise der Spalte 6 in den Querverbindungen 2 ist in der Detailvergrößerung A der Figur 2 gezeigt. In dieser Ausführungsform sind mehrere Ausnehmungen jeweils in den Querverbindungen 2 vorgesehen, wodurch mehre Spalten 6, aber auch mehrere Stege 7 in der Querverbindung 2 entstehen. Die Stege 7 sind in der Fig. 2 gleich dick gezeichnet. Sie können aber unterschiedliche Dicken aufweisen. Die Spalte 6 in der Fig.2 sind mit unterschiedlicher Dicke gezeigt, diese können aber auch gleichmäßige Dicken aufweisen.

Durch die plastische Verformung an den Sollknickpunkten, geschieht ein zeitlich versetztes Aufeinandertreffen der einzelnen Stege 7. Somit wird die Kraft in mehreren Stufen zur Verformungsenergie umgeformt. Dies geschieht solange, bis alle Stege aufeinander getroffen sind und ein Formschluß entsteht.

Die restliche Kraft wird dann durch die Querverbindung 2 auf die Montagemöglichkeit 3 beziehungsweise den darauf verwendlichen Fahrzeugsitz weitergeleitet. Optimalerweise wird jedoch die Kraft komplett in Verformungsarbeit umgeformt, sodass keine Kraft auf den Fahrzeugsitz übertragen wird.

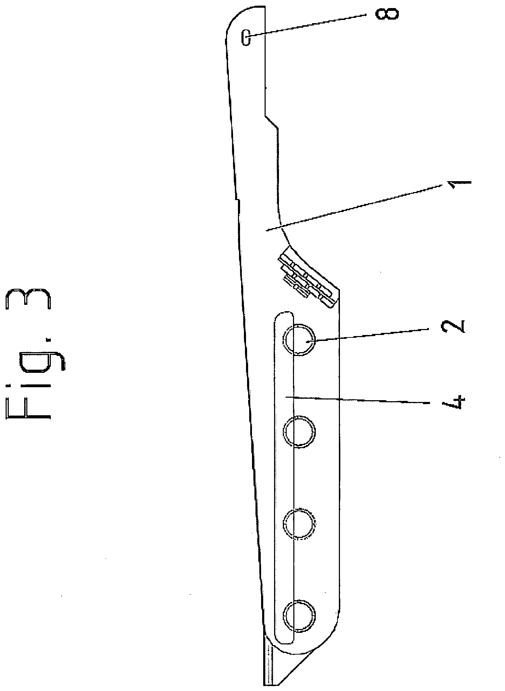

Fig. 3 zeigt die erfindungsgemäße Vorrichtung in Seitenansicht, wobei die längliche Ausdehnung der Befestigungselemente 1 gezeigt ist. In diesem Ausführungsbeispiel wird das Befestigungselement 1 über ein Befestigungsmittel 8 am Chassis des Fahrzeuges befestigt. Dies kann am Boden des Chassis, an der Wand des Chassis oder an der Decke des Chassis, geschehen. Bei der auf das Fahrzeug einwirkenden Kraft wird diese dann über das Befestigungsmittel 8 in die Befestigungselemente 1 eingeleitet.

Erfindungsgemäß sind die Querverbindungen 2 als Hohlprofil oder Vollprofil ausgebildet. In Fig.3 sind demnach Hohlprofile gezeigt. Die Profile können einen runden oder eckigen Querschnitt aufweisen, wobei hier runde Querschnitte gezeigt sind.

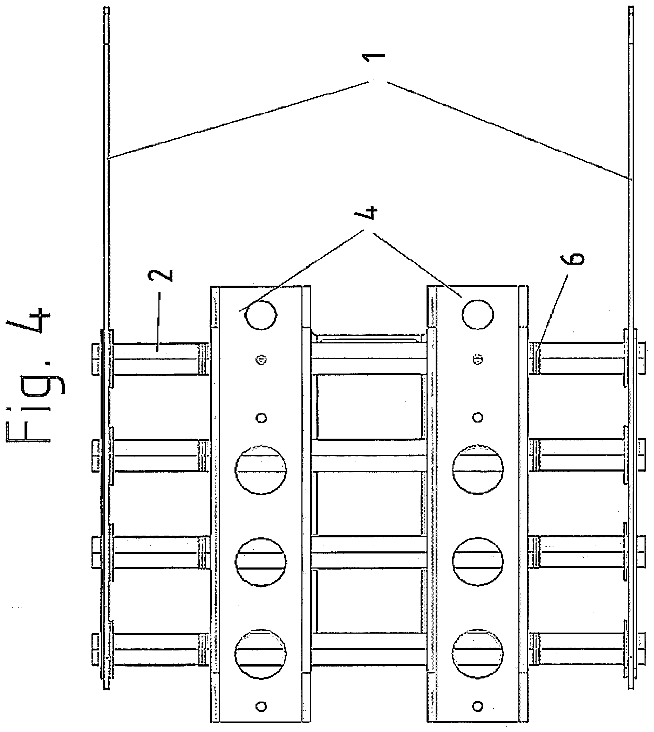

Fig. 4 zeigt die erfindungsgemäße Vorrichtung in einer Draufsicht, wobei die Schienen 4 in dieser Ansicht gut sichtbar sind. In die Schienen 4 kann der Fahrzeugsitz verschiebbar eingebracht werden, sodass seine Sitzposition einstellbar ist. Die Schiene 4 ist parallel zu den Befestigungselementen 1 und quer zu den Querverbindungen 2 an oder auf den Querverbindungen 2 befestigt. Es können mehrere Schienen 4 verwendet werden. Es ist aber auch möglich, eine Schiene 4 mit mehreren Laufflächen zu verwenden.

Das Material der Querverbindungen 2 muss plastisch verformbar sein, wobei es ebenfalls möglich ist, die Querverbindung 2 aus mehreren Materialien aufzubauen. Diese unterschiedlichen Materialien können dann unterschiedliche Festigkeiten aufweisen, sodass die Steifigkeit des Materials und somit die Fähigkeit, Kräfte in Verformungsarbeit umzuformen, variabel einstellbar ist. So kann eine Querverbindung 2, beispielsweise ein weiteres Material mit unterschiedlicher Verformbarkeit 5, eingearbeitet sein.

Die vorliegende Erfindung ist nicht auf die Merkmale aus der Beschreibung und den Figuren eingeschränkt, vielmehr sind weitere Ausgestaltungen denkbar. So können die Befestigungselemente ebenfalls aus einem plastisch verformbaren Material gefertigt sein und ebenfalls über Ausnehmungen mit Sollknickpunkten versehen sein. Ebenso kann der Sitz auch direkt auf der Montagemöglichkeit befestigt sein, ohne dass die Montagemöglichkeit Schienen aufweist.

### Bezugszeichenliste

- 1 -: Befestigungselement
- 2 -: Querverbindung
- 3 -: Montagemöglichkeit
- 4 -: Schiene
- 5 -: Material mit unterschiedlicher Verformbarkeit
- 6 -: Spalt
- 7-: Steg
- 8 -: Befestigungsmittel

## Patentansprüche

1. Vorrichtung zur Anbringung eines Fahrzeugsitzes,
mit mindestens zwei Befestigungselementen (1),
mit mehreren Querverbindungen (2) zwischen den Befestigungselementen (1),
mit mindestens einer Montagemöglichkeit (3), auf welcher der Fahrzeugsitz angeordnet wird, **dadurch gekennzeichnet, dass** die Querverbindungen (2) jeweils mit mindestens einer Ausnehmung versehen sind, wodurch mindestens ein Spalt (6) in der Querverbindung (2) entsteht.

2. Vorrichtung nach Anspruch 1, **dadurch gekennzeichnet, dass** die Montagemöglichkeit (3) aus mindestens einer Schiene (4) besteht, in welcher der Fahrzeugsitz verschiebbar angeordnet ist.

3. Vorrichtung nach Anspruch 1 oder 2, **dadurch gekennzeichnet, dass** die Querverbindungen jeweils (2) mit mehreren Ausnehmungen versehen sind, sodass mindestens ein Steg (7) zwischen den Spalten (6) entsteht.

4. Vorrichtung nach Anspruch 3, **dadurch gekennzeichnet, dass** mehrere Stege (7) mit unterschiedlichen Dicken vorgesehen sind.

5. Vorrichtung nach einem der Ansprüche 1 bis 4, **dadurch gekennzeichnet, dass** die Querverbindungen (2) als Hohlprofil oder Vollprofil ausgebildet sind.

6. Vorrichtung nach einem der Ansprüche 1 bis 5, **dadurch gekennzeichnet, dass** die Querverbindungen (2) einen runden oder eckigen Querschnitt aufweisen.

7. Vorrichtung nach einem der Ansprüche 2 bis 6, **dadurch gekennzeichnet, dass** die Schiene (4) einteilig gestaltet ist und mindestens zwei Laufflächen aufweist, in welchen der Fahrzeugsitz verschiebbar angeordnet wird.

8. Vorrichtung nach einem der Ansprüche 1 bis 7, **dadurch gekennzeichnet, dass** die Querverbindungen (2) aus plastisch verformbarem Material bestehen.

9. Vorrichtung nach einem der Ansprüche 1 bis 8, **dadurch gekennzeichnet, dass** die Querverbindungen (2) zwischen Ausnehmung und Befestigungselement (1) aus mindestens zwei verschiedenen Materialien mit unterschiedlicher Verformbarkeit (5) bestehen.

10. Vorrichtung nach einem der Ansprüche 1 bis 9, **dadurch gekennzeichnet, dass** die Schiene (4) durch an oder auf den Querverbindungen (2) befestigt ist.

11. Vorrichtung nach einem der Ansprüche 1 bis 10, **dadurch gekennzeichnet, dass** die Ausnehmungen nur einen Teil der Querverbindungen (2) betreffen und die Querverbindungen (2) nicht durchtrennen.

12. Vorrichtung nach einem der Ansprüche 1 bis 10, **dadurch gekennzeichnet, dass** zumindest eine der Ausnehmungen in der Querverbindung (2) durchgehend verläuft und diese durchtrennt.

13. Vorrichtung nach einem der Ansprüche 1 bis 12, **dadurch gekennzeichnet, dass** in den Befestigungselementen (1) Befestigungsmittel (8) vorgesehen sind, durch welche die Befestigungselemente (1) im Fahrzeug befestigt werden.

## Claims

1. Device for installing a vehicle seat,
having at least two fastening elements (1),
having a plurality of transverse connections (2) between the fastening elements (1),
having at least one mounting option (3), on which the vehicle seat is arranged, **characterized in that** the transverse connections (2) are each provided with at least one recess, as a result of which at least one gap (6) arises in the transverse connection (2).

2. Device according to Claim 1, **characterized in that** the mounting option (3) consists of at least one rail (4), in which the vehicle seat is displaceably arranged.

3. Device according to Claim 1 or 2, **characterized in that** the transverse connections (2) are each provided with a plurality of recesses such that at least one web (7) arises between the gaps (6).

4. Device according to Claim 3, **characterized in that** a plurality of webs (7) having differing thicknesses are provided.

5. Device according to one of Claims 1 to 4, **characterized in that** the transverse connections (2) are configured in the form of a hollow profile or solid profile.

6. Device according to one of Claims 1 to 5, **characterized in that** the transverse connections (2) have a round or angular cross section.

7. Device according to one of Claims 2 to 6, **characterized in that** the rail (4) is configured as one part and has at least two running surfaces in which the vehicle seat is displaceably arranged.

8. Device according to one of Claims 1 to 7, **characterized in that** the transverse connections (2) are composed of plastically deformable material.

9. Device according to one of Claims 1 to 8, **characterized in that** the transverse connections (2) between recess and fastening element (1) are composed of at least two different materials having differing deformability (5).

10. Device according to one of Claims 1 to 9, **characterized in that** the rail (4) is fastened through to or on the transverse connections (2).

11. Device according to one of Claims 1 to 10, **characterized in that** the recesses involve only one part of the transverse connections (2) and do not sever the transverse connections (2).

12. Device according to one of Claims 1 to 10, **characterized in that** at least one of the recesses runs continuously in the transverse connection (2) and severs the latter.

13. Device according to one of Claims 1 to 12, **characterized in that** fastening means (8) are provided in the fastening elements (1) and are used to fasten the fastening elements (1) in the vehicle.

## Revendications

1. Dispositif pour l'installation d'un siège de véhicule,
comprenant au moins deux éléments de fixation (1),
comprenant plusieurs liaisons transversales (2) entre les éléments de fixation (1),
comprenant au moins une possibilité de montage (3), sur laquelle le siège de véhicule est agencé, **caractérisé en ce que** les liaisons transversales (2) sont chacune munies d'au moins un évidement, ce qui produit au moins une fente (6) dans la liaison transversale (2).

2. Dispositif selon la revendication 1, **caractérisé en ce que** la possibilité de montage (3) est constituée par au moins une glissière (4), dans laquelle le siège de véhicule est agencé de manière coulissante.

3. Dispositif selon la revendication 1 ou 2, **caractérisé en ce que** les liaisons transversales (2) sont chacune munies de plusieurs évidements, de telle sorte qu'au moins une traverse (7) est produite entre les fentes (6).

4. Dispositif selon la revendication 3, **caractérisé en ce que** plusieurs traverses (7) d'épaisseurs différentes sont prévues.

5. Dispositif selon l'une quelconque des revendications 1 à 4, **caractérisé en ce que** les liaisons transversales (2) sont configurées en tant que profilé creux ou profilé plein.

6. Dispositif selon l'une quelconque des revendications 1 à 5, **caractérisé en ce que** les liaisons transversales (2) présentent une section transversale ronde ou angulaire.

7. Dispositif selon l'une quelconque des revendications 2 à 6, **caractérisé en ce que** la glissière (4) est conçue d'un seul tenant et comprend au moins deux surfaces de roulement, dans lesquelles le siège de véhicule est agencé de manière coulissante.

8. Dispositif selon l'une quelconque des revendications 1 à 7, **caractérisé en ce que** les liaisons transversales (2) sont constituées par un matériau déformable plastiquement.

9. Dispositif selon l'une quelconque des revendications 1 à 8, **caractérisé en ce que** les liaisons transversales (2) entre l'évidement et l'élément de fixation (1) sont constituées par au moins deux matériaux différents de déformabilité différente (5) .

10. Dispositif selon l'une quelconque des revendications 1 à 9, **caractérisé en ce que** la glissière (4) est fixée à travers aux ou sur les liaisons transversales (2).

11. Dispositif selon l'une quelconque des revendications 1 à 10, **caractérisé en ce que** les évidements ne concernent qu'une partie des liaisons transversales (2) et ne sectionnent pas les liaisons transversales (2).

12. Dispositif selon l'une quelconque des revendications 1 à 10, **caractérisé en ce qu'**au moins un des évidements dans la liaison transversale (2) s'étend sous forme continue et sectionne celle-ci.

13. Dispositif selon l'une quelconque des revendications 1 à 12, **caractérisé en ce que** des moyens de fixation (8) sont prévus dans les éléments de fixation (1), par lesquels les éléments de fixation (1) sont fixés dans le véhicule.
